# EUROPÄISCHE PATENTSCHRIFT

(11) **EP 1 736 296 B1**
(45) Veröffentlichungstag und Bekanntmachung des Hinweises auf die Patenterteilung: **14.12.2011**
(21) Anmeldenummer: 06121136.3
(22) Anmeldetag: 14.08.2004
(51) Int. Cl.: B29C 45/73, B29C 45/27, B29C 47/78, H05B 3/14

(54) **Heizbares Werkzeug**
Heatable mould
Moule chauffable

(30) Priorität: 16.08.2003 DE 10337685
(43) Veröffentlichungstag der Anmeldung: 27.12.2006
(62) Teilanmeldung aus: 04764073.5
(73) Patentinhaber: KraussMaffei Technologies GmbH, 80997 München (DE)
(72) Erfinder: Burr, August, 74626 Bretzfeld (DE); Müller, Andreas, 74348 Lauffen a. N. (DE); Hetschel, Martin, 74336 Brackenheim (DE); Bürkle, Erwin, 83671 Benediktbeuern (DE)
(74) Vertreter: Zollner, Richard

(56) Entgegenhaltungen:
- EP-A- 0 296 562
- DE-A- 3 712 128
- DE-A1- 10 136 678
- DE-U1- 29 623 184
- US-A- 5 261 806
- US-A1- 2003 113 398
- PATENT ABSTRACTS OF JAPAN Bd. 005, Nr. 014 (M-052), 28. Januar 1981 (1981-01-28) -& JP 55 144136 A (TOYODA GOSEI CO LTD), 10. November 1980 (1980-11-10)
- PATENT ABSTRACTS OF JAPAN Bd. 0130, Nr. 90 (M-803), 2. März 1989 (1989-03-02) & JP 63 283921 A (SHOWA DENKO KK), 21. November 1988 (1988-11-21)
- PATENT ABSTRACTS OF JAPAN Bd. 0123, Nr. 02 (M-732), 17. August 1988 (1988-08-17) & JP 63 078720 A (SEKISUI CHEM CO LTD), 8. April 1988 (1988-04-08)
- PATENT ABSTRACTS OF JAPAN Bd. 015, Nr. 362 (M-1157), 12. September 1991 (1991-09-12) & JP 03 142203 A (NIPPON CARBIDE IND CO INC), 18. Juni 1991 (1991-06-18)

## Beschreibung

Die Erfindung betrifft ein heizbares Werkzeug gemäß dem Oberbegriff des Anspruchs 1.

Werkzeuge sind in der kunststoff- und metallverarbeitenden Industrie zur Formgebung oder Weiterleitung der Schmelze bekannt. Eine Kunststoffschmelze umfasst sowohl eine reine Kunststoffschmelze wie auch eine Schmelze mit einem bestimmten Füllstoffanteil, z.B. Glasfaser, Keramikpulver, Metallpulver oder andere bekannte Füllstoffe. Der Füllstoffanteil kann dabei Werte von 90 % und mehr erreichen.

Beispielsweise werden Formwerkzeuge bei Extrudern, PUR-Schäummaschinen, Duroplast- und Thermoplast-Spritzgießmaschinen oder bei Druckgussmaschinen zur formgebenden Gestaltung eines Produktes verwendet.

In der Regel besteht ein Formwerkzeug zur Ausbildung einer Formkavität aus zwei Werkzeughälften oder -formteilen, die derart ausgestaltet sind, dass bei deren Zusammenfügen ein dem fertigen Produkt entsprechender Hohlraum entsteht, in den das zu verarbeitende Material, beispielsweise eine Kunststoffschmelze, eingeführt - zum Beispiel eingespritzt - werden kann.

Der vorliegend verwendete Begriff Werkzeug ist jedoch breit auszulegen und betrifft nicht nur formgebende Werkzeuge für das Spritzgießen und Extrudieren. Er umfasst vielmehr auch Heißkanäle und Wärmeleitdüsen sowie andere Einrichtungen, die zur Temperierung und Führung der Schmelze nach ihrer Herstellung sowie zur Verkürzung oder Beseitigung von Kaltkanälen dienen können.

Als Anwendungsbeispiel für ein beheizbares Werkzeug ist ein Formwerkzeug für eine Spritzgießmaschine zu nennen. Bei der Verarbeitung der in eine Kavität einzubringenden Schmelze oder des darin einzubringenden Produktmaterials ist es meist wichtig, dass die Kavitätsoberflächen auf eine bestimmte, auf das Material abgestimmte Temperatur gebracht werden können. Oftmals ist es auch während des Produktionsvorgangs innerhalb eines Zykluses erforderlich, die Temperatur der Kavitätsoberfläche zu verändern. Beispielsweise kann es erforderlich sein, die Temperatur während eines Einspritzvorganges selbst relativ hoch zu halten, danach die Temperatur jedoch signifikant abzusenken, um eine schnelle Erstarrung der Schmelze zu gewährleisten. Allgemein hat die Temperatur in der Kavität und der Kavitätsoberfläche dabei auch großen Einfluss auf die Qualität und Güte des herzustellenden Produktes (optische Produkte, wie optische Datenträger oder Linsen).

Um unter solchen Bedingungen schnelle Zykluszeiten und damit eine hohe Produktivität sicherzustellen, ist eine schnelle Aufheizung der Formwerkzeuge erforderlich.

Es sind jedoch auch noch weitere Anwendungsgebiete denkbar, bei denen Schmelzetemperierungen oder -heizungen notwendig sind. So könnte sich bei Kaltkanälen der Zustand der Schmelze in qualitätsvermindernder Weise ändern. Ändert sich aufgrund der Abkühlung die Viskosität, so kann es auch zu Schwierigkeiten bei der Verarbeitung der Schmelze kommen.

Aber auch bei formgebenden Düsenwerkzeugen, beispielsweise am ausgangsseitigen Ende von Extrudern, ist eine optimale Temperierung oftmals gewünscht und evtl. auch erforderlich.

Bisher sind zum Beheizen von Werkzeugen und Formen Wiederstandsheizungen beispielsweise auf Basis eines Wiederstandsdrahtes bekannt. Diese Wiederstandsheizungen können mittels elektrischer Energie betrieben werden, und die Heizelemente lassen sich auch an die Geometrien der Kavität bzw. der Kavitätsoberflächen anpassen. Zudem ist die Bereitstellung einer unterschiedlichen Heizleistung ohne weiteres möglich.

Weitere Möglichkeiten für das Beheizen von Formwerkzeugen sind mit sogenannten Dickschichtheizelementen gegeben, die hauptsächlich im Bereich der Heißkanaltechnik eingesetzt werden.

Problematisch bei der Verwendung von Heizpatronen ist die mangelnde Anpassungsfähigkeit an die Kontur einer zu beheizenden Fläche. Überdies sind die langen Reaktionszeiten beim Ändern des Temperaturniveaus nachteilig. Ein solches Heizelement kann in der Regel auch nicht mechanisch belastet werden, so dass eine zumindest geringfügige Beabstandung von der Oberfläche erforderlich ist, was zu einer Minderung der Heizleistung führt. Auch sind die Leistungskapazitäten begrenzt. So bewegt sich die flächenbezogene Heizleistung bei Dickschichtheizungen im Bereich von ca. 5,5 W/cm² und für Heizpatronen im Bereich von ca. 10 W/cm². Auch die begrenzte Lebensdauer der bekannten Heizelemente ist nachteilig.

Es sind auch andere Heizmöglichkeiten bekannt. So ist in der DE 37 12 128 ein Formeinsatz aus technischer Keramik für Gieß- und Spritzgießwerkzeuge beschrieben, der aus einer elektrisch leitenden Keramik oder einer Metallkeramik auf Nitrid- und/oder Carbidbasis besteht. Ein solcher Formeinsatz eignet sich auch für die Herstellung von Kunststoffteilen mit optischer Oberflächenqualität wie auch für die Herstellung von CD's und DVD's. Allerdings müssen beim Einsatz für optische Datenträger entweder eigene Matrizen verwendet werden oder die Einsätze sind aufwändig auszutauschen.

In der DE 199 42 364 ist ein Werkzeug zum Warmumformen beim Prägeformprozess angegeben, wobei direkt unter einem Abformwerkzeug ein Formkörper aus elektrisch leitfähiger und dadurch direkt beheizbarer Keramik in wärmeleitendem Kontakt zu diesem angebracht ist. Der Formkörper ist gegenüber der Umformmaschine durch eine Isolationsplatte thermisch und elektrisch isoliert.

In der WO 00/54949 ist ein beheizbares Werkzeug beschrieben, bei dem die Heizung durch Kohlenstofffasern realisiert ist, welche in eine Keramik eingelegt sind.

Aufgabe der vorliegenden Erfindung ist es, ein beheizbares Werkzeug wie in der DE 37 12 128 angegeben weiterzubilden, welches einfach austauschbar ist.

Diese Aufgabe wird durch die im Anspruch 1 angegebene Merkmalen gelöst.

Ein wesentlicher Gedanke ist die Verwendung einer elektrisch leitfähigen Keramik als Heizelement - anstelle eines üblicherweise benutzten Widerstandsdrahtes oder eines Dickschichtheizelementes. Eine elektrisch leitfähige Keramik lässt sich vorzugsweise mit Niederspannung sowie einem relativ hohen Strom beaufschlagen, so dass innerhalb kürzester Zeit hohe Temperaturen erreicht werden können. Aufgrund der Niederspannung sind auch keine besonderen Sicherheitsvorschriften zu beachten. Überdies lässt sich eine solche Keramik auch mit einem einfachen Regelnetzteil ansteuern.

Als Keramikbasisverbindung eignet sich eine Silizium-Nitrid-Keramik, die an sich nicht leitend ist, jedoch eine günstige Basis darstellt. Dieser Basiskeramikverbindung kann dann eine Zugabe beigemischt sein, welche die Leitfähigkeit herstellt. Beispielsweise kann dies eine Titan-Nitrid-Verbindung sein, die an sich relativ teuer ist. Die Zumischung wird im Bereich von 10 % bis 50 %, insbesondere 20 % bis 40 % gewählt. In Ausnahmefällen kann der Zugabeanteil auch sehr viel höher, insbesondere bis zu 100 % gewählt werden.

Gemäß einer vorzugsweisen Ausführungsform der Erfindung sind in der elektrisch leitenden Keramik Kühlkanäle zur Durchleitung eines Kühlmediums eingearbeitet. Dies ist hilfreich, um eine Temperaturregelung in besonders guter Weise zu gewährleisten, insbesondere nicht nur eine schnelle Erhitzung des Formwerkzeugs sondern auch eine schnelle Abkühlung sicherzustellen. Diese Kühlkanäle lassen sich beispielsweise durch Erodierung ausbilden. Bei einer Durchleitung eines Kühlmediums (gasförmig, flüssig) lässt sich die Temperatur in der Keramik und damit auch im Formwerkzeug selbst in einer erforderlichen Weise einstellen. Insgesamt sind damit Heiz- und Kühlmöglichkeiten in gleicher Weise gegeben.

Weiter ist es möglich, die elektrisch leitende Keramik als Einsatz zum Einfügen in eine Werkzeug-Basisstruktur auszubilden. Um eine elektrische Isolierung gegenüber anderen Bauteilen und/oder gegenüber der Schmelze zu erreichen, kann die elektrisch leitende Keramik zumindest teilweise oxidiert ausgeführt sein. Die so aufgebrachte Oxidschicht dient dabei als Isolation.

Erfindungsgemäß ist auf der Oberfläche eine Struktur, insbesondere eine Nanostruktur, ausgebildet, die mit der Kunststoffschmelze in Kontakt kommt. In diesem Fall wird die Nanostruktur bei der Produktherstellung übertragen und auf der Oberfläche des Produktes abgebildet. Ein solches Verfahren kann beispielsweise zur Ausbildung von Informationen wie bei optischen Datenträgern (CD, DVD etc.) dienen oder aber zur Erreichung bestimmter (z.B. physikalischer) Effekte bei einem Produkt, wie eine Entspiegelung einer Linse oder der Veränderung der Lichttransmission bei einem optischen Produkten. Natürlich können alle Arten von Oberflächenstrukturen durch eine entsprechende Gestaltung der Oberfläche der elektrisch leitenden Keramik gebildet werden. Die Ausbildung der Oberflächenstruktur ist beispielsweise durch einen Material-Abscheideprozess möglich.

Da sich für eine solche elektrisch leitende Keramik ein Material mit guter mechanischer Eigenschaft (zum Beispiel hoher Druckfestigkeit) auswählen lässt, kann die Keramik selbst mit einer solchen Oberfläche ausgestaltet werden. Dazu sollte jedoch ein hochabriebfestes Material für die elektrisch leitende Keramik ausgewählt werden.

Bei einer besonders bevorzugten Ausführungsform der Erfindung ist die elektrisch leitfähige Keramik mit dem Werkzeug bzw. mit einem anderen Element des Werkzeugs stoffschlüssig verbunden. Dies kann beispielsweise durch Diffusionsschweißen erreicht werden. In diesem Fall ist die elektrische Keramik nicht nur in das Werkzeug integriert sondern als Teil davon ausgebildet.

Bei einer besonders bevorzugten Ausführungsform der Erfindung wird die elektrisch leitfähige Keramik als Werkzeugeinbausatz ausgeführt, welcher in die Ausnehmung eines Werkzeugträgers einsetzbar oder auf einen Werkzeugträger aufsetzbar ist. Werden dabei dimensionsmäßig standardisierte Werkzeugträger mit entsprechenden Ausnehmungen und/oder Halterungen verwendet, so können die einzelnen elektrisch leitenden und damit elektrisch beheizbaren Keramikformteile einfach gegeneinander ausgetauscht werden, um so verschieden Kavitäten bilden zu können. Werden auch die elektrischen Zuführungen entsprechend koppelbar mit der elektrisch leitenden Keramik ausgebildet, so können die einzelnen Keramikeinsätze nach einem Öffnen einer Schließeinheit einfach entnommen und gegen einen anderen Keramiksatz ausgetauscht werden. Entscheidend dabei ist natürlich, dass das Kavitätsmaß die Dimension des Keramikeinsatzes nicht überschreitet bzw. erreicht. Ein solch austauschbarer Keramikeinsatz wäre beispielweise bei der Herstellung von optischen Datenträgern wie CD's oder DVD's nützlich, für deren Herstellung Informationen anstelle des bislang bekannten Stampers auf die Kavitätsoberfläche der elektrisch leitfähigen Keramik eingearbeitet oder aufgebracht sind.

Um eine ausreichende Stabilität der Keramik zu gewährleisten, kann diese auch auf einem Trägerelement, beispielsweise einem normalen Werkzeugstahl angeordnet sein.

Vorzugsweise ist die elektrisch leitende Keramik in ihrer Form oder Oberfläche an die Geometrie der mit der Schmelze in Kontakt kommenden Oberfläche (z.B. der Kavitätsoberflächen oder der Heißkanäle) angepasst. Mit der elektrisch leitfähigen Keramik lässt sich die Temperaturverteilung über die zu beheizende Oberfläche gleichmäßig gestalten. Dies ist beispielsweise bei Kavitätsoberflächen notwendig, da die Temperierung der Kavitätsoberflächen Einfluss auf die Qualität des herzustellenden Produktes hat.

Die elektrische Versorgung der elektrisch leitenden Keramik lässt sich durch Aufbringen der Keramik auf eine oder mehrere elektrisch leitfähige Oberflächen erreichen. Durch ein Aufbringen der elektrisch leitenden Keramik auf eine oder mehrere elektrisch leitfähige Oberflächen müssen keine eigenen und separaten elektrischen Zu- bzw. Ableitungen vorgesehen werden. Dabei wird die Isolierung der elektrisch leitenden Keramik im Bereich der Kontaktierung weggelassen.

Verschiedene Ausführungsbeispiele der vorliegenden Erfindung werden nachfolgend und mit Bezug auf die beiliegenden Zeichnungen näher erläutert. Die beiliegenden Zeichnungen zeigen in
- Figur 1: eine schematische Teilschnittansicht einer Ausführungsform eines Formwerkzeugs,
- Figur 2: eine schematische Teilschnittdarstellung einer ersten Ausführungsform eines erfindungsgemäßen Formwerkzeugs und
- Figur 3: eine schematische Teilschnittansicht einer zweiten Ausführungsform eines erfindungsgemäßen Formwerkzeugs.

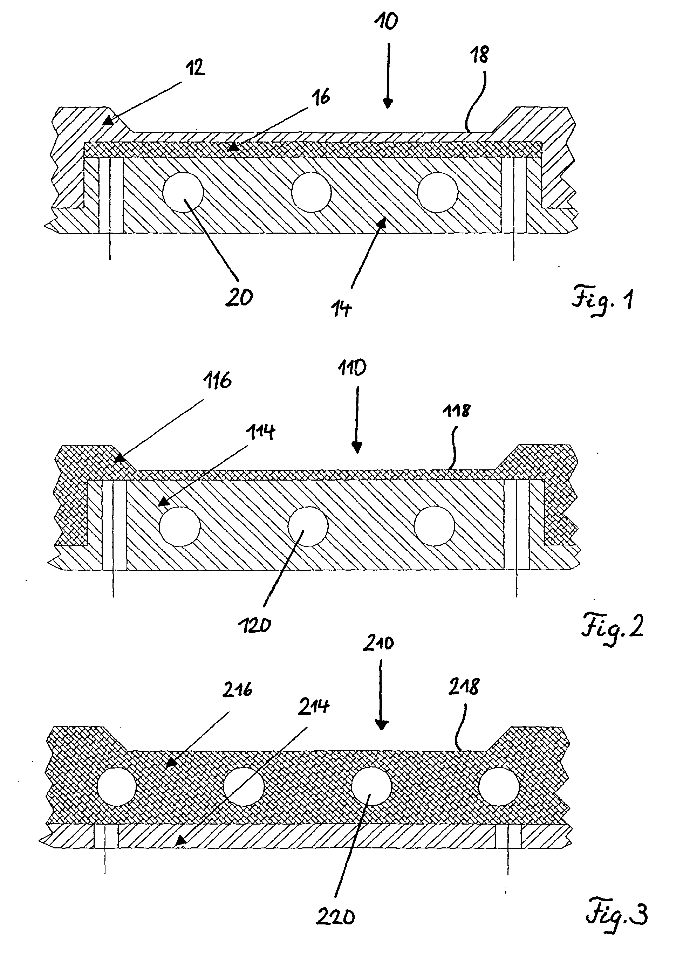

In den dargestellten Figuren 1 bis 3 sind jeweils nur ein Teil eines Formwerkzeugs in schematischer Schnittdarstellung abgebildet. Diese Abbildungen sind jedoch ausreichend zur Erläuterung der vorliegenden Erfindung anhand eines Formwerkzeuges für eine Spritzgießmaschine. Für ein funktionsfähiges Formwerkzeug müssen jedoch zumindest zwei solcher Formwerkzeugteile zur Ausbildung einer mit Kunststoff- oder Metallschmelze füllbaren Kavität zusammengeführt werden. Wie eingangs erwähnt, umfasst der Begriff Kunststoffschmelze dabei auch Compoundschmelzen mit einem Füllstoffanteil. Dies ist jedoch aus dem Stand der Technik hinreichend bekannt und muss daher vorliegend nicht näher erläutert werden.

In Figur 1 ist ein Ausschnitt in Teilschnittansicht aus einem Teil eines Formwerkzeugs 10 dargestellt, wobei das Formwerkzeug an einer nicht näher dargestellten Aufspannplatte einer Schließeinheit einer Spritzgießmaschine montierbar ist.

Der Formwerkzeugteil 10 aus Figur 1 umfasst ein Basis- und Trägerelement 14 aus einem normalen Werkzeugstahl. Dieses erste Element besitzt Kühldurchflussöffnungen, durch die bei Bedarf ein Kühlmittel hindurchgeleitet werden kann. Die Kavitätsoberfläche wird durch ein weiteres Werkzeugelement 12 gebildet, an deren in Figur oben dargestellter Fläche eine Kavitätsfläche 18 ausgebildet ist. Vorliegend ist zwischen dem Werkzeugelement 12 sowie dem Basis- und Trägerelement 14 eine elektrisch leitfähige Keramik 16 angeordnet. Die elektrisch leitfähige Keramik 16 besteht aus einem druckfesten Material, welches beim Anlegen einer Niederspannung von einem hohem Strom durchflossen wird. Dies ermöglicht innerhalb kürzester Zeit eine sehr hohe Temperaturbildung in der Keramik. Durch die mechanische Druckfestigkeit ist es möglich, die Keramik 16 unmittelbar nahe der Kavitätsoberfläche 18 anzuordnen. Damit wird gewährleistet, dass die mit der Keramik 16 generierte Temperatur die Kavitätsoberfläche 18 schnell erreicht. Vorliegend ist die Kavitätsoberfläche 18 parallel zur Keramik 16 ausgebildet. Sollte die Kavitätsoberfläche 18 anders geformt sein, so könnte auch die Keramik 16 an die jeweilige Geometrie entsprechend angepasst werden.

Die elektrisch leitfähige Keramik 16 ist in nicht näher dargestellter Weise mit elektrischen elektrischen Kontaktierungen versehen, um einen Stromdurchfluss durch die Keramik zu erzeugen. Sichtbar in den Figuren 1 bis 3 sind lediglich die elektrischen Zuführungen. Ebenfalls nicht dargestellt ist der Anschluss der elektrisch leitfähigen Keramik an ein Regelnetzteil. Dieses Regelnetzteil kann einfach ausgebildet und separat angeordnet, aber auch in die Steuerung einer elektrischen Spritzgießmaschine integriert werden.

Die erfindungsgemäße Ausführungsform gemäß Figur 2 unterscheidet sich von derjenigen in Figur 1 dadurch, dass das in Figur 1 die Kavitätsoberfläche bildende, aus Werkzeugstahl bestehende Element 12 weggelassen ist und die Keramik 116 nunmehr selbst mit der Kavitätsoberfläche 118 ausgebildet ist. Auch bei dieser Ausführungsform ist die elektrische leitfähige Keramik 116 auf einem Basis- und Trägerelement 114 angeordnet, wobei dieses Basis- und Trägerelement 114 wiederum von Kühlöffnungen durchzogen ist. Mit der unmittelbaren Ausbildung der Kavitätsoberfläche auf der Keramik selbst kann die Temperatur genau an Ort und Stelle generiert werden, an der sie auch benötigt wird. Dies führt zu einer besonders schnellen Aufheizung der Kavitätsoberfläche. In Kombination mit einem Durchströmen eines Kühlmediums durch die Kühlkanäle 120 kann auch ein relativ schnelles Abkühlen und damit eine gewünschte Temperaturregelung erreicht werden. Die elektrisch leitfähige Keramik 116 garantiert dabei auch eine sehr hohe flächenbezogene Heizleistung. Auf der Oberfläche 118 der elektrisch leitenden Keramik kann eine Struktur aufgebracht sein.

Wird die Keramik 116 selbst als Kavitätsoberfläche vorgesehen, so ist die Verwendung eines hochabriebfesten Keramikwerkstoffes sinnvoll. Überdies sollte dann die Oberfläche der Keramik 118 beispielsweise mittels einer Oxidschicht elektrisch isoliert werden. Durch die Verwendung einer Niederspannung für den Betrieb der elektrisch leitfähigen Keramik sind an die Betriebssicherheit überdies nur relativ geringe Anforderungen zu stellen.

Eine Ausführungsform der Erfindung ist in Figur 3 dargestellt. Hier ist die in Figur 2 gezeigte Keramik 116 nunmehr dicker ausgebildet (vgl. Bezugszeichen 216). Überdies sind die Kühlkanäle 220 bei dieser Ausführungsform in besonders bevorzugter und erfinderischer Weise in die Keramik 216 selbst integriert. Dies kann beispielsweise durch ein Erosionsverfahren geschehen. Das Formwerkzeug lässt sich bereits durch entsprechendes Ausbilden der elektrisch leitfähigen Keramik 216 mit einer Kavitätsoberfläche 218 und den Durchflusskanälen 220 im Großen und Ganzen fertig stellen. Die Keramik 216 muss dann nur noch auf das entsprechende Halte- und Trägerelement 214 aufgebracht werden. Im Halte- und Trägerelement 214 können auch die entsprechenden Zu- und Ableitungen für die elektrische Versorgung der Keramik vorgesehen sein. Bei dieser Ausgestaltung können die Wärme und Kühlung sehr Oberflächen nah erzeugt werden, was zu besonders kurzen Reaktionszeiten und einer guten Effizienz sowohl beim Heizen wie auch beim Kühlen beiträgt. Vorliegend nicht näher dargestellt, kann die elektrisch leitende Keramik 216 als austauschbarer Einsatz ausgebildet sein, der auf das Halte- und Trägerelement 214 befestigbar aufgebracht werden kann. Dabei kann die elektrische Isolation an den Kontaktierungsstellen weggelassen werden, so dass beim Einsetzen der elektrisch leitenden Keramik 216 unmittelbar ein elektrischer Kontakt mit der elektrischen Zuführung aufgebaut ist. Zudem ist noch ein lösbarer Anschluss der Durchflusskanäle an das Gesamtkühlsystem erforderlich. In diesem Fall können dimensionsgleiche Einsätze schnell und mühelos ausgetauscht werden. Die Heiz- und Kühlleistung ist in der jeweiligen elektrisch leitenden Keramik entsprechend den Anforderungen wähl- und ausbildbar.

Eine analoge Ausgestaltung eines beheizbaren Werkzeugs ist auch für ein Extrusionswerkzeug (z.B. einen Rohrkopf) am ausgangsseitigen Ende eines Extruders möglich.

Insgesamt lässt sich mit der vorgeschlagenen Verwendung einer elektrisch leitfähigen Keramik - egal in welcher Alternative - eine schnelle Aufheizung der mit einer Schmelze in Kontakt kommenden Oberfläche eines Werkzeugs bei hoher Lebensdauer und Funktionssicherheit erreichen. Dazu tragen auch die hohen flächenbezogenen Heizleistungen bei wie die hohe Druckfestigkeit bei, so dass die Keramik unmittelbar zur Ausbildung der Oberfläche selbst eingesetzt werden kann. In Kombination mit einer unmittelbar integrierten Kühlung, dem Aufbringen einer Struktur auf eine direkt mit einer Schmelze in Kontakt tretenden Oberfläche der elektrisch leitenden Keramik, dem Vorsehen eines Keramikverbundes oder der Ausgestaltung der Keramik als austauschbares Werkzeugelement lassen sich besonders vorteilhafte Ausgestaltungen erreichen.

### Bezugszeichenliste

- 10, 110, 210: Hälfte einer Werkzeugform
- 12: Formwand des Werkzeugs
- 14, 114, 214: Basis- und Trägerelement
- 16: Elektrisch leitende Keramik
- 116, 216: Elektrisch leitende Keramik mit Kavitätsfläche
- 18, 118, 218: Kavitätsfläche
- 20, 210, 220: Kühlkanal

- 50, 150, 250: Wärmeleitdüse
- 52, 152, 252: Schmelzekanal
- 54, 154, 254: Elektrisch leitfähige Keramik
- 56, 156: Gehäuseteil

## Patentansprüche

1. Beheizbares Werkzeug für eine eine Kunststoffschmelze oder eine Metallschmelze verarbeitende Vorrichtung umfassend eine mit einer Schmelze in Kontakt kommende Oberfläche, wobei
- eine elektrisch leitende Keramik (16, 54, 116, 154, 216, 254) zum Heizen zumindest im Bereich der Oberfläche in diesem oder mit diesem integriert vorgesehen ist,
- ein Werkzeugträger mit einer Ausnehmung versehen ist und die elektrisch leitende Keramik (16, 54, 116, 154, 216, 254) als Einsatz zum Einfügen in die Ausnehmung des Werkzeugträger ausgebildet ist, wobei der Einsatz zumindest teilweise eine elektrische Isolierung aufweist,
- die elektrisch leitende Keramik (116, 216) zumindest teilweise mit einer Oberfläche ausgebildet ist, die beim Betrieb der Vorrichtung direkt mit der Schmelze in Kontakt kommt,
- auf die elektrisch leitende Keramik eine Struktur, insbesondere eine Nanostruktur, aufgebracht ist,
- die elektrischen Zuführungen koppelbar mit der elektrisch leitfähigen Keramik ausgebildet sind und
- eine Austauschbarkeit von Keramiksätzen für unterschiedliche Kavitäten gewährleistet ist,
**dadurch gekennzeichnet,**
**dass** die elektrische Isolation an den Kontaktierungsstellen weggelassen ist, derart, dass beim Einsetzen der elektrisch leitenden Keramik unmittelbar ein elektrischer Kontakt mit der elektrischen Zuführung aufgebaut ist, und
**dass** zur Ansteuerung der elektrisch leitenden Keramik (16, 116, 216) ein Regelnetzteil vorgesehen ist.

2. Beheizbares Werkzeug nach Anspruch 1,
**dadurch gekennzeichnet,**
**dass** die Nanostruktur durch Abscheidung von Schichten hergestellt ist.

3. Beheizbares Werkzeug nach einem der Ansprüche 1 oder 2,
**dadurch gekennzeichnet,**
**dass** in der elektrisch leitenden Keramik (216) Kühlkanäle (220) zur Durchleitung eines Kühlmediums eingearbeitet sind.

4. Beheizbares Werkzeug nach einem der Ansprüche 1 bis 3,
**dadurch gekennzeichnet,**
**dass** die elektrisch leitfähige Keramik auf der Basis einer Silizium-Nitrid-Verbindung gebildet ist, der die Leitfähigkeit erzeugende Stoffe beigemischt sind.

5. Beheizbares Werkzeug nach einem der vorhergehenden Ansprüche,
**dadurch gekennzeichnet,**
**dass** die Leitfähigkeit durch Zugabe einer Titan-Nitrid-Kombination zu einer Basisverbindung gegeben ist.

6. Beheizbares Werkzeug nach Anspruch 5,
**dadurch gekennzeichnet,**
**dass** die Zugabe sich in einem Volumen oder Gewichts-Bereich von 0 bis 50 % bewegt.

7. Beheizbares Werkzeug nach einem der vorhergehenden Ansprüche,
**dadurch gekennzeichnet,**
**dass** die elektrisch leitfähige Keramik eine Dicke von 0,5 mm bis 4 mm, insbesondere von 1 mm bis 3 mm aufweist.

8. Beheizbares Werkzeug nach einem der Ansprüche 1 bis 7,
**dadurch gekennzeichnet,**
**dass** die elektrisch leitende Keramik (16, 116, 216) mit Niederspannung und einem hohem Strom zur Erzielung einer hohen Heizleistung betreibbar ist.

9. Beheizbares Werkzeug nach einem der vorhergehenden Ansprüche,
**dadurch gekennzeichnet,**
**dass** die elektrisch leitfähige Keramik mittels einer stoffschlüssigen Verbindung mit einem übrigen Element des Werkzeugelements verbunden ist.

10. Beheizbares Werkzeug nach Anspruch 9,
**dadurch gekennzeichnet,**
**dass** als übriges Element eine Gehäuseteil oder ein Trägerteil dient.

11. Beheizbares Werkzeug nach einem der vorhergehenden Ansprüche,
**dadurch gekennzeichnet,**
**dass** als Keramikwerkstoff ein hoch abriebfester Werkstoff verwendet ist.

12. Beheizbares Werkzeug nach einem der vorhergehenden Ansprüche,
**dadurch gekennzeichnet,**
**dass** die Kühlkanäle (220) durch Erodierung in die elektrisch leitende Keramik (216) eingebracht sind.

13. Beheizbares Werkzeug nach einem der vorhergehenden Ansprüche,
**dadurch gekennzeichnet,**
**dass** die elektrisch leitende Keramik (16, 116, 216) auf einem Werkzeugstahl (14, 114, 214) angeordnet ist, der als Trägerelement dient.

14. Beheizbares Werkzeug nach einem der vorhergehenden Ansprüche,
**dadurch gekennzeichnet,**
**dass** die elektrisch leitende Keramik (16, 116, 216) von ihrer Form und/oder Oberfläche an die Geometrie der Kavitätsoberfläche (18, 118, 218) angepasst ist.

15. Beheizbares Werkzeug nach einem der vorhergehenden Ansprüche 1 bis 14,
**dadurch gekennzeichnet,**
**dass** das Werkzeugelement eine Heißkanalvorrichtung aufweist.

## Claims

1. Heatable tool for a device processing a plastic melt or a molten metal, comprising a surface coming in contact with a molten material, wherein
- an electrically conductive ceramic part (16, 54, 116, 154, 216, 254) for heating at least in the region of the surface is provided therein or is integrated therewith,
- a tool carrier is provided with a recess and the electrically conductive ceramic part (16, 54, 116, 154, 216, 254) is constructed as an insert for insertion into the recess of the tool carrier, wherein the insert has at least partially an electrical insulation,
- the electrically conductive ceramic part (116, 216) is constructed at least partially with a surface which in the operation of the device comes directly in contact with the molten material,
- a structure, in particular a nanostructure, is applied onto the electrically conductive ceramic part,
- the electrical leads are able to be coupled with the electrically conductive ceramic part and
- an exchangeability of ceramic sets for different cavities is guaranteed,
**characterized in that**
the electrical insulation is omitted at the contacting sites, such that on inserting of the electrically conductive ceramic part, an electrical contact with the electrical lead is established directly, and
for activation of the electrically conductive ceramic part (16, 116, 216) a regulating power supply unit is provided.

2. Heatable tool according to Claim 1,
**characterized in that**
the nanostructure is produced by the deposition of layers.

3. Heatable tool according to one of Claims 1 or 2,
**characterized in that**
cooling channels (220) for conveying a cooling medium are incorporated in the electrically conductive ceramic part (216).

4. Heatable tool according to one of Claims 1 to 3,
**characterized in that**
the electrically conductive ceramic part is formed on the basis of a silicon-nitride compound, to which substances producing the conductivity are added.

5. Heatable tool according to one of the preceding claims,
**characterized in that**
the conductivity is produced by the addition of a titanium-nitride combination to a basic compound.

6. Heatable tool according to Claim 5,
**characterized in that**
the addition ranges in a volume- or weight range from 0 to 50 %.

7. Heatable tool according to one of the preceding claims,
**characterized in that**
the electrically conductive ceramic part has a thickness of 0.5 mm to 4 mm, in particular of 1 mm to 3 mm.

8. Heatable tool according to one of Claims 1 to 7,
**characterized in that**
the electrically conductive ceramic part (16, 116, 216) is able to be operated with low voltage and with a high current to achieve a high heating output.

9. Heatable tool according to one of the preceding claims,
**characterized in that**
the electrically conductive ceramic part is connected by means of a substance-to-substance connection with another element of the tool element.

10. Heatable tool according to Claim 9,
**characterized in that**
a housing part or a carrier part serves as the other element.

11. Heatable tool according to one of the preceding claims,
**characterized in that**
a highly abrasion-resistant material is used as ceramic material.

12. Heatable tool according to one of the preceding claims,
**characterized in that**
the cooling channels (220) are introduced by erosion into the electrically conductive ceramic part (216).

13. Heatable tool according to one of the preceding claims,
**characterized in that**
the electrically conductive ceramic part (16, 116, 216) is arranged on a tool steel (14, 114, 214) which serves as carrier element.

14. Heatable tool according to one of the preceding claims,
**characterized in that**
the electrically conductive ceramic part (16, 116, 216) is adapted in its shape and/or surface to the geometry of the cavity surface (18, 118, 218).

15. Heatable tool according to one of the preceding Claims 1 to 14,
**characterized in that**
the tool element has a heating channel device.

## Revendications

1. Outil chauffable pour un dispositif usinant du plastique fondu ou du métal fondu, comprenant une surface venant en contact avec une masse fondue, dans lequel
- une céramique à conductivité électrique (16, 54, 116, 154, 216, 254) est prévue dans celui-ci ou intégrée à celui-ci pour chauffer au moins au niveau de la surface,
- un support d'outilest doté d'un évidement et la céramique à conductivité électrique (16, 54, 116, 154, 216, 254) est formée en tant qu'insert pour s'introduire dans l'évidement du support d'outil, sachant que l'insert présente au moins partiellement une isolation électrique,
- la céramique à conductivité électrique (116, 216) est formée au moins partiellement d'une surface qui vient directement en contact avec la masse fondue lors du fonctionnement du dispositif,
- une structure, en particulier une nanostructure, est appliquée sur la céramique à conductivité électrique,
- les alimentations électriques sont formées en pouvant être couplées à la céramique à conductivité électrique et
- une interchangeabilité de jeux de céramique pour des cavités différentes est garantie,
**caractérisé en ce que**
l'isolation électrique est supprimée aux points de contact, de telle sorte que lors de la mise en place de la céramique à conductivité électrique, il se crée directement un contact électrique avec l'alimentation électrique, et
qu'une pièce de réseau régulier est prévue pour commander la céramique à conductivité électrique (16, 116, 216).

2. Outil chauffable selon la revendication 1, **caractérisé en ce que** la nanostructure est fabriquéepar séparation de couches.

3. Outil chauffable selon l'une des revendications 1 ou 2, **caractérisé en ce que** des canaux de refroidissement (220) pour conduireun agent de refroidissement au travers, sont formés dans la céramique à conductivité électrique (216).

4. Outil chauffable selon l'une des revendications 1 à 3, **caractérisé en ce que** la céramique à conductivité électrique est formée à base d'une liaison silicium-nitrure à laquelle sont mélangées des matièresgénérant la conductivité.

5. Outil chauffable selon l'une des revendications précédentes, **caractérisé en ce que** la conductibilité est donnée par l'addition d'une combinaison titane-nitrure à une liaison de base.

6. Outil chauffable selon la revendication 5, **caractérisé en ce que** l'addition se déplace dans un volume ou une plage de poids de 0 à 50 %.

7. Outil chauffable selon l'une des revendications précédentes, **caractérisé en ce que** la céramique à conductivité électrique présente une épaisseur de 0,5 mm à 4 mm, en particulier de 1 mm à 3 mm.

8. Outil chauffable selon l'une des revendications 1 à 7, **caractérisé en ce que** la céramique à conductivité électrique (16, 116, 216) peut être entraînée à basse tension et à courant élevé pour obtenir une puissance de chauffage élevée.

9. Outil chauffable selon l'une des revendications précédentes, **caractérisé en ce que** la céramique à conductivité électrique est reliée à un élément restant de l'élément d'outil via une jonction par liaison dematière.

10. Outil chauffable selon la revendication 9, **caractérisé en ce qu'**une partie de boîtier ou une pièce porteuse sert d'élément restant.

11. Outil chauffable selon l'une des revendications précédentes, **caractérisé en ce qu'**on emploie un matériau hautement résistant à l'usure comme matériau de céramique.

12. Outil chauffable selon l'une des revendications précédentes, **caractérisé en ce que** les canaux de refroidissement (220) sont intégrés dans la céramique à conductivité électrique (216) par érodage.

13. Outil chauffable selon l'une des revendications précédentes, **caractérisé en ce que** la céramique à conductivité électrique (16, 116, 216) est disposée sur un acier à outil (14, 114, 214) qui sert d'élément porteur.

14. Outil chauffable selon l'une des revendications précédentes, **caractérisé en ce que** la céramique à conductivité électrique (16, 116, 216) est adaptée à la géométrie de la surface de la cavité (18, 118, 218) de par sa forme et/ou sa surface.

15. Outil chauffable selon l'une des revendications 1 à 14, **caractérisé en ce que** l'élément d'outil présente un dispositif de canal de chauffage.
